# EUROPEAN PATENT APPLICATION

(11) **EP 2 512 002 A2**
(43) Date of publication of application: **17.10.2012**
(21) Application number: 11250613.4
(22) Date of filing: 29.06.2011
(51) Int. Cl.: H02J 7/00, H02J 7/35

(54) **Solar energy portable power bank**

(30) Priority: 11.04.2011 TW 100206289
(71) Applicant: Lin, Yung-Shen, Sanzhi Dis New Taipei City 252 (TW)
(72) Inventor: Lin, Yung-Shen, Sanzhi Dis New Taipei City 252 (TW)
(74) Representative: Powell, Timothy John

(57) **Abstract**

A solar energy portable power bank supplies power to external devices, and includes: a bank body, a solar panel, a storage battery, a power converter, a fan, an input port and an output port. The solar panel placed on the surface of the bank body provides electrical energy to the storage battery in case of no external power supply to charge the storage battery. With the storage battery placed inside the bank body, it is very convenient for bringing about. The storage battery can be charged by any external power supply through the input port at night or on cloudy days for increasing the standby time of the solar energy portable power bank. The usage lifespan of the power converter can be extended because of the use of the fan. The power converter provides electrical energy for the output ports in order to adapt easily to various types of the external devices.

## Description

### FIELD OF THE INVENTION

The present invention relates to a solar energy portable power bank, and, more particularly, to a solar energy portable power bank that supplies power to various external devices.

### BACKGROUND OF THE INVENTION

With advancement in technology, portable electronic devices, such as mobile phones and laptops become more prevalent. However, such a portable electronic device uses its own battery. When used outdoors and if the battery runs out, the battery can be replaced with a spare battery. If both batteries are running out of power, the portable electronic device cannot be used.

To solve the problems above, and when the battery or spare battery of portable electronic devices are exhausted, thus the portable power supply device is described in R.O.C. Patent No. M303494. Figure 1 shows a portable power supply device. The shell base 11 of the battery compartment 110 includes an output terminal 12, an input terminal 13 and a switch 14. The switch 14 controls the power state of the output terminal 12. The battery compartment 110 can accommodate various rechargeable batteries 15. The input terminal 13 is used to plug into the solar energy conversion device 16. The solar energy conversion device 16 provides electrical energy for charging the rechargeable batteries 15. After charging, the output terminal 12 can be activated by the switch 14 to make these rechargeable batteries provide electrical energy into the output terminal 12 for portable electronic devices.

However, the solar energy conversion device 16 is the external part of the shell base 11, In other words, the shell base 11 and the solar energy conversion device 16 are two different devices. With this design, it is not convenient for bringing about.

Furthermore, the rechargeable batteries 15 must be prepared and placed inside the shell base 11 to provide electrical energy for the portable electronic devices. If forgetting to prepare the rechargeable batteries 15, the portable electronic devices cannot be used. In addition, the rechargeable batteries 15 can only provide the limited electrical energy. They cannot provide electrical energy for long-term use. This design can only provide DC (Direct Current), but cannot provide AC (Alternating Current). Therefore, the portable power supply device cannot provide electrical energy for all types of the portable electronic devices.

Therefore, it has become very important to overcome the problems encountered in known technology.

### SUMMARY OF THE INVENTION

In view of the problems encountered in known technology, an object of this invention is to provide a solar energy portable power bank providing electrical energy for all types of the portable electronic devices.

A further object of this invention is to provide a solar energy portable power bank having the effective heat dissipation.

To achieve these objects above, the present invention provides a solar energy portable power bank providing electrical energy for the external devices, including: a bank body, a solar energy plate placed on the surface of the bank body to produce the first electrical energy, an input port used for the input of the second electrical energy to receive external electrical energy, a storage battery placed inside the bank body to connect to the solar energy plate and the input port for storage of the first and the second electrical energy, a power converter placed inside the bank body to connect to the storage battery for converting electrical energy stored in the storage battery to the third electrical energy of the external devices, a fan placed inside the bank body to receive electrical energy from the storage battery for dissipating the heat of the power converter and an output port used for the output of the third electrical energy to connect to the power converter.

The solar energy portable power bank further comprises: a power indicator connected to the storage battery to indicate the electrical energy of the storage battery and a setting switch connected to the power indicator to setup the electrical energy indicator.

The storage battery comprises lithium iron phosphate batteries. The third electrical energy can be DC or AC. In other words, the third electrical energy can produce DC 5 or 12 volts and AC 110 volts.

The solar energy portable power bank further comprises a hose connecting to the fan and the bank body's opening for dissipating the heat of the bank body outwards. Additionally, the output port comprises at least an AC three-hole socket, at least a DC lighter socket and/or at least a DC USB socket. The output port further comprises an electrical energy output switch for switching the three-hole socket, the lighter socket, and/or the USB socket on and off.

In summary, the solar energy power bank of the present invention used to provide electrical energy for the external devices comprises a bank body, a solar energy plate, an input port, a storage battery, a power converter, a fan and an output port. The solar energy plate is placed on the surface of the bank body to produce electrical energy for the storage battery in case of no external power supply to charge the storage battery. The storage battery is placed inside the bank body. With this means, it is very convenient for bringing about. The input port is used to receive external electrical energy and the storage battery can be charged by the external electrical energy at night or on cloudy days in order to increase the standby time of the solar energy portable power bank. The power converter provides electrical energy for the output port to suit all types of the external devices.

### BRIEF DESCRIPTION OF THE DRAWINGS

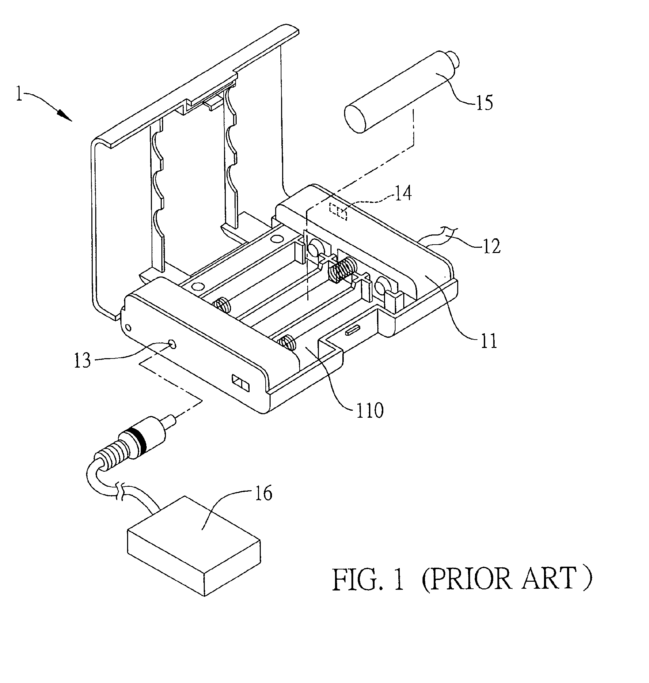

Figure 1 is a three-dimensional view of a portable power supply device disclosed in R.O.C. patent No. M303494.
Figure 2A is a three-dimensional view of a solar energy portable power bank according to the present invention.
Figure 2B is a block diagram of the solar energy portable power bank according to the present invention; and
Figure 2C is a three-dimensional view of a part of the solar energy portable power bank.

### DETAILED DESCRIPTION OF THE INVENTION

The following embodiment further illustrates the present invention. The advantages and efficiency of the present invention can be readily understandable through this description.

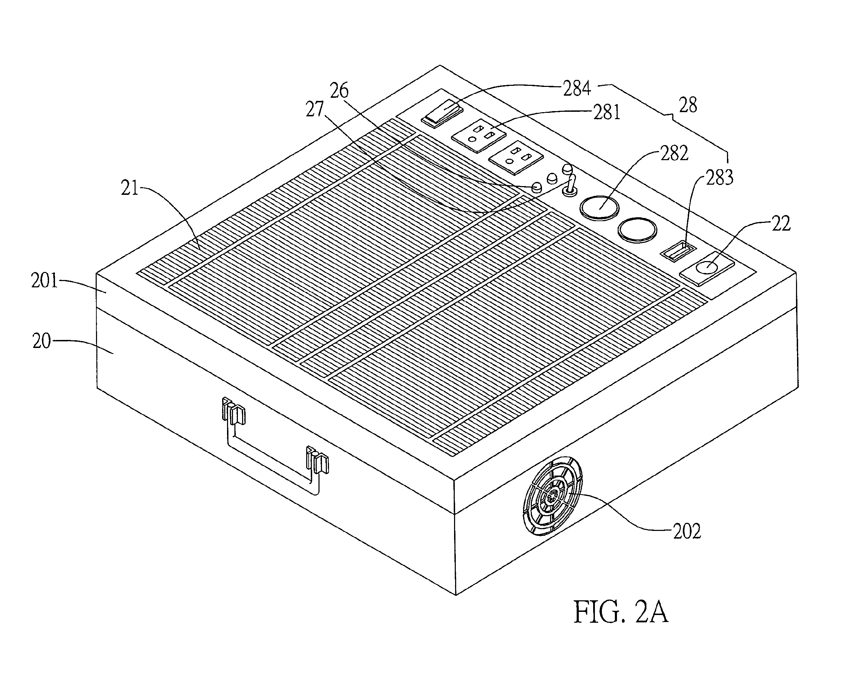

Figure 2A to 2C illustrate the solar energy portable power bank in an embodiment acccording to the present invention.

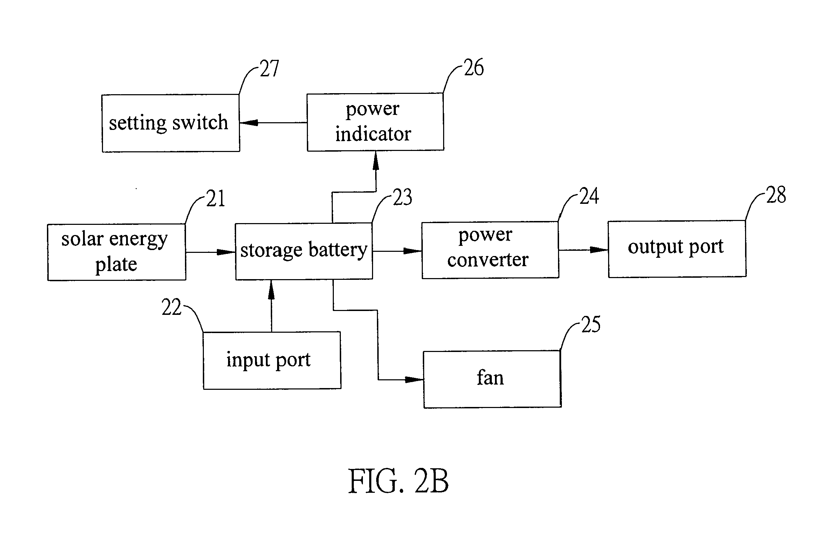

The solar energy portable power bank used to provide electrical energy for the external devices comprises a bank body 20, a solar energy plate 21, an input port 22, a storage battery 23, a power converter 24, a fan 25 and an output port 28, as shown in Figure 2A and 2B.

The bank body 20 comprises an internal area 203 and a cover 201. The internal area 203 can accommodate the storage battery 23, the power converter 24, the fan 25 and other electronic devices.

The solar energy plate 21, such as polysilicon solar energy plate receiving solar energy is placed on the surface of the bank body 20 to provide DC for the first electrical energy, for example.

The input port 22 is used for the input of the second power, such as DC to receive external electrical energy. When the solar energy plate 21 cannot be used at night, the input port 22 will be used to charge the storage battery 23 for increasing the standby time of the solar energy portable power bank.

The storage battery 23, such as lithium iron phosphate battery, has the advantage of high conversion rate, long life and high stability. The storage battery 23 is placed inside the bank body to connect to the solar energy plate 21 and the input port 22 for storage of the first and the second power;

The power converter 24 is placed inside the bank body 20 to connect to the storage battery 23 for converting electrical energy stored in the storage battery to the third electrical energy of external device. The third electrical energy can be DC or AC. In other words, the third electrical energy can provide DC 5 or 12 volts and AC 110 volts.

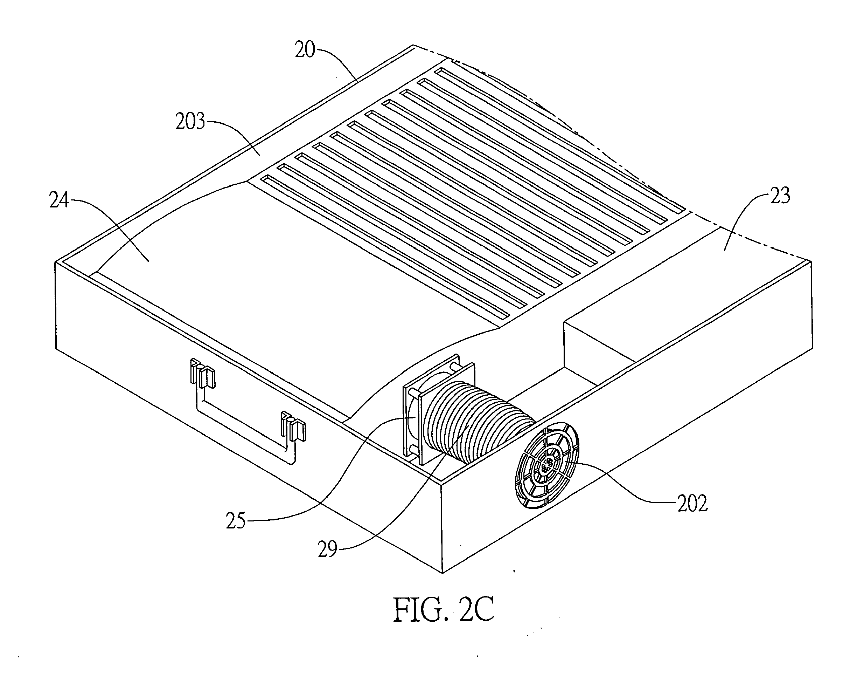

The storage battery 23 provides electrical energy for the fan 25, such as DC fan. The fan 25 is used to dissipate the heat of the power converter 24 and of the bank body outwards, as shown in Figure 2C. The solar energy portable power bank of the present invention further comprises a hose 29. The hose 29 connects to the fan 25 and the bank body's opening 202 for dissipating the heat of the bank body outwards. This means is able to reduce the temperature of the bank body 20, increase stability and extend the usage lifespan.

The output port 28 is used for the output of the third electrical energy to connect to the power converter 24. The output port 28 comprises an AC (110vots) three-hole socket 281, a DC (5 or 12 volts) lighter socket 282 and/or a DC (5 or 12 volts) USB socket 283.

In order to facilitate the operation of the users, the solar energy portable power bank of the present invention, as shown in Figure 2B, further comprises a power indicator 26 made up of various LEDs (Light-emitting diodes). The power indicator 26 connects to the storage battery 23 to indicate the electrical energy of the storage battery 23. This means allows the users to know the state of the storage battery 23. In addition, the solar energy portable power bank of the present invention further comprises a setting switch 27 connected to the power indicator to setup the indication of electrical energy.

In summary, the solar energy portable power bank of the present invention used to provide electrical energy for the external devices comprises a bank body 20, a solar energy plate 21, an input port 22, a storage battery 23, a power converter 24, a fan 25 and an output port 28. The solar energy plate 21 is placed on the surface of the bank body 20 to provide electrical energy for the storage battery 23. The storage battery 23 is placed inside the bank body 11. With this design, there is no need to prepare any rechargeable battery and it is very convenient for bringing about. The input port 22 is used to receive external electrical energy and the storage battery 23 can be charged by the external power supply at night or on cloudy days in order to increase standby time of the solar energy portable power bank. The power converter 24 provides electrical energy for the output port in order to suit all types of the external devices.

The preferred embodiment has been set forth herein for the purpose of illustration. However, the description should not be deemed to be a limitation on the scope of the invention. Accordingly, various modifications, adaptations and alternatives may occur to one skilled in the art without departing from the spirit and scope of the claimed inventive concept.

## Claims

1. A solar energy portable power bank used for power supply of external devices, comprising:
a bank body;
a solar energy plate placed on a surface of the bank body to produce a first electrical energy;
an input port externally installed on the bank body for receiving external electrical energy as a second electrical energy;
a storage battery placed inside the bank body and connected to the solar energy plate and the input port, for receiving and storing the first and the second electrical energy;
a power converter placed inside the bank body and connected to the storage battery, for converting electrical energy stored in the storage battery to a third electrical energy adapted for the external devices;
a fan placed inside the bank body and connected to the storage battery, for receiving electrical energy from the storage battery and dissipating heat of the power converter; and
an output port externally installed on the bank body and connected to the power converter, for outputting the third electrical energy.

2. The solar energy portable power bank according to claim 1, wherein the storage battery comprises a lithium iron phosphate battery.

3. The solar energy portable power bank according to claim 1, wherein the third electrical is DC or AC.

4. The solar energy portable power bank according to claim 3, wherein the third electrical energy provides 5 or 12 DC volts.

5. The solar energy portable power bank according to claim 3, wherein the third electrical energy provides 110 AC volts.

6. The solar energy portable power bank according to claim 1, wherein the fan is a DC fan for heat dissipation.

7. The solar energy portable power bank according to claim 1, further comprising:
a hose connected to the fan and the bank body, the bank body having an opening on a portion thereof connected to the hose, for dissipating the heat of the bank body outwards.

8. The solar energy portable power bank according to claim 1, wherein the output port comprises an AC three-hole socket.

9. The solar energy portable power bank according to claim 8, wherein the output port further comprises a DC lighter socket.

10. The solar energy portable power bank according to claim 9, wherein the output port further comprises a DC USB socket.

11. The solar energy portable power bank according to claim 10, wherein the output port further comprises an electrical energy output switch for switching on or off the three-hole socket, the lighter socket, or the USB socket.

12. The solar energy portable power bank according to claim 1, further comprising:
a power indicator connected to the storage battery to indicate electrical energy of the storage battery; and
a setting switch connected to the power indicator to setup an indication of electrical energy.

13. The solar energy portable power bank according to claim 12, wherein the power indicator is made up of a plurality of LEDs.
